# EUROPÄISCHE PATENTANMELDUNG

(11) **EP 3 569 506 A1**
(43) Veröffentlichungstag der Anmeldung: **20.11.2019**
(21) Anmeldenummer: 19169397.7
(22) Anmeldetag: 16.04.2019
(51) Int. Cl.: B64D 15/16, B64D 15/12

(54) **STRUKTURBAUTEIL FÜR EIN FLUGZEUG**

(30) Priorität: 16.05.2018 DE 102018111703
(71) Anmelder: Airbus Operations GmbH, 21129 Hamburg (DE); Airbus Defence and Space GmbH, 82024 Taufkirchen (DE)
(72) Erfinder: Linde, Peter, 21129 Hamburg (DE); Karch, Christian, 82024 Taufkirchen (DE); Bonaccurso, Elmar, 82024 Taufkirchen (DE)
(74) Vertreter: LKGLOBAL Lorenz & Kopf PartG mbB Patentanwälte

(57) **Zusammenfassung**

Ein Strukturbauteil (2) für ein Flugzeug weist mindestens einen aufheizbaren Bauteilabschnitt (4) auf, der aufheizbare Bauteilabschnitt (4) aufweisend einen Lagenaufbau mit einer inneren Basisstruktur (6), eine außerhalb der inneren Basisstruktur (6) angeordnete erste Isolierschicht (8), eine außerhalb der ersten Isolierschicht (8) angeordnete Funktionslage (10) aus in ein Matrixmaterial eingebetteten Kohlenstoff-Allotropen, und mindestens eine außerhalb der Funktionslage (10) angeordneten Schutzschicht (16). Ferner weist das Strukturbauteil (2) eine mit der Funktionslage (10) verbundene elektrische Anschlusseinrichtung (12) zum selektiven Beaufschlagen der Funktionslage (10) mit einem elektrischen Strom zum Aufheizen der Funktionslage (10) auf.

## Beschreibung

### TECHNISCHES GEBIET

Die Erfindung betrifft ein Strukturbauteil für ein Flugzeug, ein Verfahren zum Herstellen eines Strukturbauteils sowie ein Flugzeug mit mindestens einem solchen Strukturbauteil.

### HINTERGRUND DER ERFINDUNG

Bauteile von Flugzeugen, die direkt in eine Anströmung gerichtet sind, können unter bestimmten Umgebungsbedingungen und Flugzuständen Vereisung ansetzen. Aus dem Stand der Technik sind zahlreiche Vorrichtungen bekannt, die dennoch einen eisfreien Zustand dieser Bauteile erreichen können. Zum Einen sind Vorrichtungen bekannt, die ein anfängliches Anhaften von Eis verhindern (sogenanntes Anti-Icing). Des Weiteren sind Vorrichtungen bekannt, die bereits angehaftetes Eis entfernen können (sogenanntes De-Icing). Die Vorrichtungen können auf der Einleitung von Wärme basieren, etwa mittels Zapfluft, die aus Verdichterstufen eines Turboluftstrahltriebwerks entnommen wird. Außerdem sind Vorrichtungen bekannt, bei denen durch aktives Verformen von Vorderkantenbereichen Eis abgesprengt wird, etwa durch pneumatisch expandierbare Kissen aus einem Elastomer, durch transiente magnetische Kräfte bei metallischen Vorderkanten oder dergleichen.

In modernen Verkehrsflugzeugen wird der Verbrauch von Zapfluft eingeschränkt und die vollständige Abkehr von Zapfluft wird bevorzugt. Es existieren daher auch Vorrichtungen, die auf andere Art Wärme erzeugen können. Es ist etwa bekannt, Heizmatten mit einer elektrischen Widerstandsheizung an einer Innenseite von Vorderkanten von Strömungsbauteilen anzuordnen, um Wärme lokal zu erzeugen und abzugeben.

EP 2 873 617 A1 offenbart eine Vorrichtung zur Enteisung und/oder Vermeidung von Eisbildung für ein Luftfahrzeug, das eine Wärmeabgabeeinrichtung zur Abgabe von Wärme an einen Oberflächenbereich des Luftfahrzeuges aufweist, welche zur linienförmigen Wärmeabgabe zwecks Erzeugung einer Sollbruchstelle oder Sollbruchlinie oder Trennlinie in sich auf dem Oberflächenbereich ansammelndem Eis ausgebildet ist.

### ZUSAMMENFASSUNG DER ERFINDUNG

Es ist eine Aufgabe der Erfindung, ein Strukturbauteil vorzuschlagen, welches auf alternative und verbesserte Weise zur lokalen Erwärmung eingerichtet ist und ein möglichst geringes Gewicht aufweist.

Die Aufgabe wird gelöst durch ein Strukturbauteil mit den Merkmalen des unabhängigen Anspruchs 1. Vorteilhafte Ausführungsformen und Weiterbildungen sind den Unteransprüchen und der nachfolgenden Beschreibung zu entnehmen.

Es wird ein Strukturbauteil für ein Flugzeug vorgeschlagen, das mindestens einen aufheizbaren Bauteilabschnitt aufweist. Der aufheizbare Bauteilabschnitt weist ferner einen Lagenaufbau mit einer inneren Basisstruktur, einer außerhalb der inneren Basisstruktur angeordneten ersten Isolierschicht, einer außerhalb der ersten Isolierschicht angeordneten Funktionslage aus in ein Matrixmaterial eingebetteten Kohlenstoff-Allotropen, und mindestens einer außerhalb der Funktionslage angeordneten Schutzschicht auf. Das Strukturbauteil weist ferner eine mit der Funktionslage verbundene elektrische Anschlusseinrichtung zum selektiven Beaufschlagen der Funktionslage mit einem elektrischen Strom zum Aufheizen der Funktionslage auf.

Erfindungsgemäß besitzt das Strukturbauteil folglich einen Aufbau, der aus mehreren Schichten besteht. An dieser Stelle ist bereits darauf hinzuweisen, dass dieser Schichtenaufbau nicht zwangsläufig ein Verbund aus faserverstärkten Kunststoffen sein muss, sondern auch metallische Schichten bzw. Lagen aufweisen kann. Des Weiteren können zwischen den einzelnen Schichten auch weitere Schichten angeordnet sein, die ebenso eine Funktion aufweisen, jedoch nicht explizit benannt werden.

Die innere Basisstruktur ist dafür vorgesehen, eine gewünschte Stabilität des Bauteils zu erreichen. Insbesondere ist die innere Basisstruktur so ausgelegt, dass die geforderte mechanische Festigkeit praktisch ausschließlich von der inneren Basisstruktur bereitgestellt wird. Die innere Basisstruktur kann je nach Konzept des Flugzeugs aus einem oder mehreren unterschiedlichen Materialien bestehen. Neben klassischen Metallstrukturen sind auch Faserverbundwerkstoffe oder Kombinationen hiervon denkbar. Die innere Basisstruktur kann neben einem schalenförmigen Bauteil auch eine Versteifungsstruktur beinhalten.

Außerhalb der inneren Basisstruktur ist eine erste Isolierschicht angeordnet. Die erste Isolierschicht kann direkt auf der inneren Basisstruktur angeordnet sein oder auf einer oder mehreren Zwischenlagen. Die erste Isolierschicht kann insbesondere eine elektrisch isolierende Schicht sein, jedoch auch zur thermischen Isolierung dienen. Diese Varianten werden weiter nachfolgend erläutert.

Außerhalb der ersten Isolierschicht ist eine Funktionslage aus Kohlenstoff-Allotropen angeordnet, die in ein Matrixmaterial eingebettet sind. Durch die Verwendung eines derartigen Aufbaus kann eine elektrisch leitfähige, dünne Schicht realisiert werden, die ein großflächiges Einleiten von Wärme durch Anlegen einer elektrischen Spannung erlaubt. Die Funktionslage kann eine besonders geringe Dicke aufweisen, die ein zusätzliches Gewicht für das Strukturbauteil minimiert. Durch die Verwendung von Kohlenstoff-Allotropen ergibt sich dennoch eine besonders vorteilhafte Wärmeentwicklung beim Beaufschlagen der Funktionslage mit einer elektrischen Spannung. Die Funktionslage kann aus einer einzelnen Gewebeschicht aufgebaut sein. Alternativ dazu kann die Funktionslage auch eine Lage aus ungewebten, geordneten oder ungeordneten Allotropen enthalten, die eine Dicke aufweist, welche der Dicke einer einzelnen Gewebeschicht entspricht.

Die Schutzschicht, welche außerhalb der zweiten Isolierschicht angeordnet ist, dient hauptsächlich dem Schutz vor Erosion und anderen mechanischen Beeinträchtigungen des Lagenaufbaus. Diese kann ein Lack, eine Farbe, eine metallische Schutzlage oder ähnliches aufweisen. Selbstverständlich kann die Schutzschicht auch mehrlagig aufgebaut sein.

Durch den erfindungsgemäßen Aufbau wird eine Enteisungsvorrichtung mit einem besonders geringen Gewicht und dennoch einer hohen Effizienz bereitgestellt. Die Verwendung von Kohlenstoff-Allotropen, die in ein Matrixmaterial eingebettet sind, erlauben zusätzlich zumindest teilweise die Funktion des Schutzes der inneren Basisstruktur vor mechanischer Beschädigung, durch äußere mechanische Stöße. Je nach Stärke beispielsweise eines Vogelschlags, Hagel oder eines anderen Stoßes kann die mechanische Beeinträchtigung der inneren Basisstruktur verringert oder verhindert werden.

Ein besonderer weiterer Vorteil liegt darin, dass ein besonders hoher Schutz gegen mechanische Beschädigung der betreffenden Vorderkante durch eine Stöße erreicht wird. Insbesondere eine Verbindung aus einem thermoplastischen Matrixmaterial mit eingebetteten Kohlenstoff-Allotropen und bevorzugt Kohlenstoff-Nanoröhrchen, kann den gewünschten Stoßschutz erreichen. Während metallische Strukturen bei einer mechanischen Stoßbelastung prinzipiell beschädigt werden können, kann je nach Anzahl der Lagen von Kohlenstoff-Allotropen eine deutliche Reduktion mechanischer Schäden bis zur vollständigen Verhinderung mechanischer Schäden erreicht werden. Bereits eine einzige Lage beispielsweise einer Matte aus ungewebten Kohlenstoff-Nanoröhrchen könnte ausreichend sein, eine deutliche Reduktion von möglichen Schäden zu erreichen.

In einer vorteilhaften Ausführungsform kann zusätzlich außerhalb der Funktionslage eine zweite Isolierschicht angeordnet sein, die ähnlich wie die erste Isolierschicht aufgebaut sein kann. Diese zweite Isolierschicht sollte jedoch derart gestaltet sein, dass insbesondere eine elektrische Isolierung geschaffen wird. Dennoch sollte besonderer Wert darauf gelegt werden, einen möglichst ungehinderten Wärmedurchgang von der Funktionslage nach außen zu ermöglichen, so dass die Effizienz der Wärmeeinleitung maximiert wird.

In einer bevorzugten Ausführungsform weist die innere Basisstruktur eine Verbundstruktur aus einem Matrixmaterial mit darin eingebetteten Verstärkungsfasern auf. Insbesondere kann das Matrixmaterial ein Polymer oder ein Harzsystem sein, in das die Verstärkungsfasern eingebettet sind. Diese könnten in Form von Geweben oder Gelegen realisiert sein, die ein- oder bevorzugt mehrlagig und entsprechend der vorgesehenen Belastungsrichtung vorgesehen sind. Es bietet sich insbesondere an, Verstärkungsfasern zu verwenden, die mehrlagig und in mehreren Richtungen verlaufen. Die Faserrichtungen können an geforderte mechanische Eigenschaften angepasst werden. Alternativ dazu könnten auch Lagen aus ungewebten Fasern bzw. Fasergelegen Verwendung finden. Die Fasern könnten dabei eine oder mehrere diskrete Faserrichtungen aufweisen oder omnidirektional zum Erreichen quasiisotroper Eigenschaften realisiert werden. Zusätzlich könnten eine oder mehrere Lagen eines metallischen Werkstoffs vorgesehen sein. Insbesondere bei dieser Ausführung der inneren Basisstruktur liegt der besondere Vorteil des Aufbaus darin, dass sämtliche Lagen ohne weiteres mit einem im Wesentlichen herkömmlichen Verfahren zum Herstellen eines Bauteils aus einem Faserverbundwerkstoff hergestellt werden können. Sämtliche Schichten sind flexibel und lassen sich bahnförmig und automatisiert auf eine Werkzeugoberfläche aufbringen. Alle ein Matrixmaterial aufweisenden Schichten lassen sich gemeinsam aushärten und bilden folglich ein monolithisches Bauteil.

Bevorzugt weist die innere Basisstruktur einen kohlefaserverstärkten Kunststoff auf. Die Kombination eines kohlefaserverstärkten Kunststoffs mit der Funktionslage kann galvanische Korrosion zwischen der Basisstruktur und der Funktionslage verhindern. Neben der Ausführung als Duroplast mit Kohlenstofffasern kann auch ein Thermoplast mit eingebetteten Kohlenstofffasern in Erwägung gezogen werden. Dies kann insbesondere Polyetherketonketon (PEKK), Polyetheretherketon (PEEK), Polyetherimid (PEI), Polycarbonat (PC), Polypropylen (PP) oder andere Polymere umfassen.

Bevorzugt weist die Funktionslage Kohlenstoff-Nanoröhrchen auf, die in das Matrixmaterial eingebettet sind. Die Dichte von Matten, Gelegen oder Geweben aus Kohlenstoff-Nanoröhrchen ist sehr gering. Die Dichte hängt von dem Herstellprozess ab, dem Typ von Kohlenstoff-Nanoröhrchen (einwandig, doppelwandig, mehrwandig) sowie der chemischen und thermischen Nachbehandlung. Allgemein kann die Dichte von etwa 0,2 bis etwa 0,8 g/cm³ betragen. In direktem Vergleich mit der Dichte von Graphit (2,1 bis 2,3 g/cm³) und der Dichte von metallischen Strukturen/Drähten (Aluminium etwa 2,7 g/cm³) ist die Gewichtseinsparung bei der Verwendung von Kohlenstoff-Nanoröhrchen deutlich erkennbar. Trotz des deutlich niedrigeren Gewichts sind keine Einbußen hinsichtlich der Wärmeentwicklung zu erwarten. Zusätzlich dazu können höhere Stromdichten realisiert werden als bei graphit- oder metallbasierten Heizelementen. Zudem ist die Strombelastbarkeit einer Struktur aus Kohlenstoff-Nanoröhrchen um ein Vielfaches höher als von Aluminium oder Kupfer. Die thermische Stabilität kann bei der Verwendung von Kohlenstoff-Nanoröhrchen zudem deutlich verbessert werden. Durch Heizelemente aus Kohlenstoff-Nanoröhrchen kann eine besonders gleichförmige Temperaturverteilung erreicht werden, die bei der Verwendung von metallischen Drähten, Graphit oder anderen Kohlenstoff-Allotropen kaum möglich ist. Aufgrund der niedrigen thermischen Masse kann ein besonders schnelles Aufheizen erreicht werden.

Wird für die Funktionslage ein Matrixmaterial in Form eines Thermoplasts eingesetzt, kann dies besondere Vorteile für die Stoßabsorption haben. Ein Thermoplast kann an sich bereits stoßabsorbierend wirken. In Kombination mit insbesondere Kohlenstoff-Nanoröhrchen kann die Fähigkeit zur Absorption von Stößen erhöht werden.

Es ist bevorzugt, dass die Funktionslage aus einer porösen Matte ungewebter Kohlenstoff-Nanoröhrchen ausgebildet ist. Die Matte ist besonders dazu geeignet, in einen herkömmlichen Herstellprozess für ein Strukturbauteil etwa aus kohlefaserverstärktem Kunststoff integriert zu werden. Die einzelnen Kohlenstoff-Nanoröhrchen haften durch die Van-der-Waals-Kräfte zusammen und weisen quasiisotrope Materialeigenschaften auf. Damit wird ein besonders vorteilhafter Ersatz eines ansonsten metallischen, elektrisch-leitenden Materials erreicht.

In einer bevorzugten Ausführungsform ist die erste Isolierschicht als thermische und elektrische Isolierschicht ausgeführt. Die erste Isolierschicht kann nichtleitende Fasern, insbesondere Glasfasern, aufweisen. Glasfasern können, wie auch Kohlefasern, aufgrund ihrer Eignung zur Verarbeitung als biegeweiche Gewebe oder Gelege sehr leicht verarbeitet werden und auf gewünschte mechanische Eigenschaften angepasst werden. Da Glasfasern zudem nichtleitend sind, kann es sich empfehlen, eine auf Glasfasern basierende erste Isolierschicht in den Lagenaufbau einzubinden. Die erste Isolierschicht kann folglich etwa ein Glasfaserverbundmaterial aufweisen, bei dem Glasfaserlagen in Form von Gelegen oder Gewebe in ein Matrixmaterial eingebettet sind. Das Matrixmaterial der ersten Isolierschicht muss nicht zwingend mit dem Matrixmaterial anderer Schichten übereinstimmen.

Alternativ kann die erste Isolierschicht auch Kohlefasern aufweisen, die eine isolierende Beschichtung besitzen. Die Materialkontinuität wird innerhalb des Lagenaufbaus verbessert und die Stabilität im Vergleich zu Glasfasern leicht gesteigert. Insbesondere in der Position der ersten Isolierschicht können folglich Spannungssprünge und Delaminationen besser vermieden werden.

Bevorzugt ist die zweite Isolierschicht als elektrische Isolierschicht ausgeführt. Damit kann insbesondere der Stromfluss auf die Funktionslage begrenzt werden und benachbarte Komponenten werden hiervon nicht beaufschlagt. Im Wesentlichen kann der Aufbau der zweiten Isolierschicht dem der ersten Isolierschicht entsprechen.

Die zweite Isolierschicht kann etwa Aluminiumnitrid in der Form z. B. einer dünnen polymorphen Schicht aufweisen.

Ferner betrifft die Erfindung ein Verfahren zum Herstellen eines Strukturbauteils, insbesondere eines Strukturbauteils nach einem der Ansprüche 1 bis 9, aufweisend die Schritte: Bereitstellen einer inneren Basisstruktur, Aufbringen einer ersten Isolierschicht auf die innere Basisstruktur, Aufbringen einer Funktionslage aus in ein Matrixmaterial eingebetteten Kohlenstoff-Allotropen, und Aufbringen einer Schutzschicht.

Bevorzugt kann das Verfahren das Aushärten zumindest der Funktionslage aufweisen. Dies kann als abschließender Schritt oder als Schritt vor dem Aufbringen der Schutzschicht ausgebildet sein.

Ferner kann das Verfahren den Schritt des Aufbringens einer zweiten Isolierschicht umfassen.

Das Verfahren ist bevorzugt so ausgeführt, dass zumindest das Anordnen der Funktionslage mithilfe einer automatisierten Vorrichtung erfolgt. Diese ist bevorzugt mit einem automatisierten Faserablegekopf oder einem automatisierten Bandablegekopf ausgestattet.

Ferner betrifft die Erfindung ein Flugzeug aufweisend mindestens ein Strukturbauteil nach der vorhergehenden Beschreibung, wobei das Flugzeug eine elektrische Energiequelle aufweist, die selektiv mit der Anschlusseinrichtung verbindbar ist.

In einer vorteilhaften Ausführungsform ist der aufheizbare Bauteilabschnitt an einer Vorderkante des Strukturbauteils angeordnet.

Dabei kann das mindestens eine Strukturbauteil zumindest eine Komponente eines Flügels oder eines Leitwerks sein.

Schließlich betrifft die Erfindung eine Verwendung einer Funktionslage aus in ein Matrixmaterial eingebetteten Kohlenstoff-Nanoröhrchen an einem Strukturbauteil eines Flugzeugs zur elektrischen Beheizung und zum Schutz vor mechanischen Stößen einer Vorderkante des Strukturbauteils.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
Fig. 1 zeigt eine schematische, teilweise geschnittene, dreidimensionale Darstellung eines Strukturbauteils.
Fig. 2 zeigt eine Vorrichtung zur automatisierten Herstellung eines Strukturbauteils.
Fig. 3 zeigt ein Flugzeug, welches ein derartiges Strukturbauteil aufweist.
Fig. 4 zeigt eine schematische, blockbasierte Darstellung eines erfindungsgemäßen Verfahrens zum Herstellen eines Strukturbauteils.

### DETAILLIERTE DARSTELLUNG EXEMPLARISCHER AUSFÜHRUNGSFORMEN

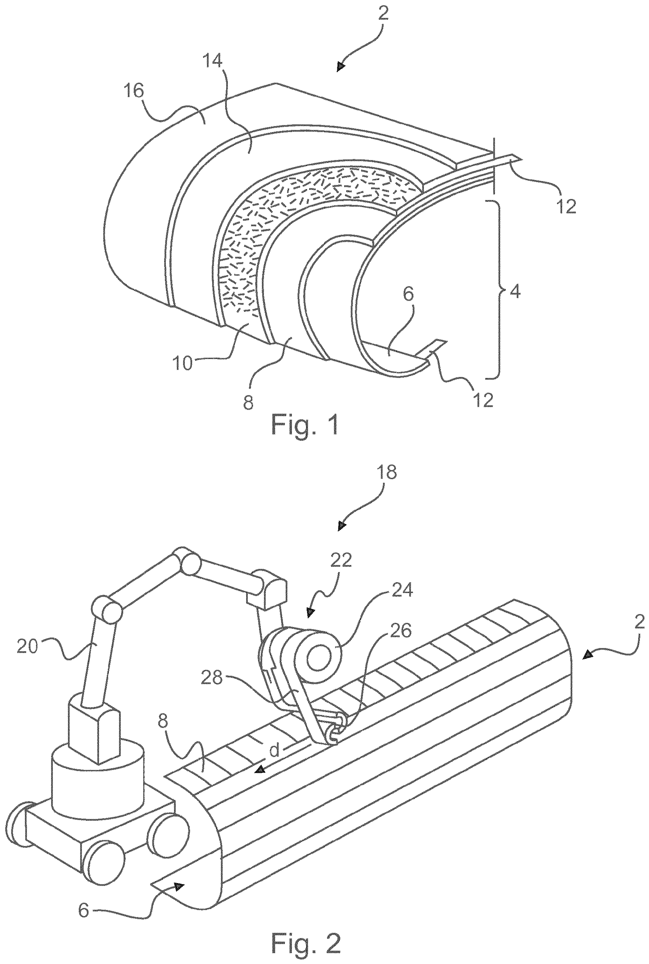

Fig. 1 zeigt einen Teil eines Strukturbauteils 2, welches einen aufheizbaren Bauteilabschnitt 4 aufweist. Exemplarisch ist das Strukturbauteil 2 ein Teil eines Flügels, wobei der beheizbare Bauteilabschnitt 4 eine Vorderkante ausbildet. Das Strukturbauteil 2 weist eine innere Basisstruktur 6 auf, welche auf verschiedene Arten realisierbar ist. Die innere Basisstruktur 6 wird hier lediglich schematisch dargestellt. Tatsächlich kann sich anbieten, eine mehrere Versteifungselemente aufweisende innere Basisstruktur 6 vorzusehen. Die innere Basisstruktur 6 kann aus unterschiedlichen Materialien hergestellt sein. Neben metallischen Werkstoffen bieten sich auch faserverstärkte Verbundwerkstoffe und Kombinationen hiervon an, beispielsweise sogenannte "Fiber Metal Laminates".

An die innere Basisstruktur 6 schließt sich eine erste Isolierschicht 8 an, die in diesem Fall als thermische und elektrische Isolierschicht fungiert. Sie ist als dielektrische Schicht ausgeführt. Beispielhaft kann die erste Isolierschicht 8 aus einem glasfaserverstärkten Kunststoff bestehen. Dieser könnte sowohl ein Duromer-Matrixmaterial als auch ein thermoplastisches Matrixmaterial aufweisen. Die Schichtstärke der ersten Isolierschicht 8 sollte derart bemessen sein, dass kein übermäßiger Wärmeeintrag auf die innere Basisstruktur 6 ausgeübt wird.

Hieran schließt sich nach außen die Funktionslage 10 an, welche beispielhaft aus einer Matte an ungewebten Kohlenstoff-Nanoröhrchen besteht, die in ein Matrixmaterial eingebettet sind. Diese Matte ist eine flexible, formbare und poröse Schicht, welche sich mit herkömmlichen Verfahren zum Verarbeiten von Verstärkungsfasern oder dergleichen verarbeiten lässt.

Die Funktionslage 10 weist exemplarisch mehrere Anschlusseinrichtungen 12 auf, die im Wesentlichen als elektrische Anschlussbleche, Drähte, eine Sammelschiene oder dergleichen ausgeführt sind. Hierüber ist möglich, eine Spannung an die Funktionslage 10 anzulegen, so dass durch den dann einsetzenden Stromfluss eine Heizleistung generiert wird.

Selbstverständlich können weitaus mehr dieser Anschlusseinrichtungen 12 vorhanden sein, die entlang der Funktionslage 10 verteilt werden. Die Funktionslage 10 kann ferner auch segmentiert sein, so dass beispielsweise bestimmte Bereiche mit einer höheren Heizleistung versehen werden können als andere Bereiche.

An die Funktionslage schließt sich exemplarisch eine zweite Isolierschicht 14 an, welche primär als elektrische Isolierschicht ausgeführt ist. Bevorzugt ist die zweite Isolierschicht 14 mit einer sehr geringen Dicke ausgestattet, so dass die Heizleistung durch die Funktionslage 10 sehr gut nach außen übertragen wird. Die zweite Isolierschicht 14 könnte etwa aus einer sehr dünnen Lage eines glasfaserverstärkten Kunststoffs hergestellt sein.

Schließlich wird das Strukturbauteil 2 durch eine äußere Schutzschicht 16 abgedeckt, die als Lack, Farbe, Metallfolie oder dergleichen ausgeführt sein könnte.

Ein besonderer Vorteil dieses Aufbaus liegt darin, dass herkömmliche, automatisierte Verfahren und Vorrichtungen zum Herstellen verwendet werden können. In Fig. 2 wird das Bauteil 2 dargestellt, das über eine automatisierte Vorrichtung 18 hergestellt wird. Die Vorrichtung 18 wird exemplarisch mit einem Roboterarm 20 dargestellt, der exemplarisch einen automatisierten Ablegekopf 22 trägt. Dieser weist beispielhaft eine Abgabewalze 24 und eine Umlenkwalze 26 auf.

Durch eine Verfahrbewegung in einer Ablagerichtung d wird bahnförmiges Material 28 von der Abgabewalze 24 abgegeben und durch die Umlenkwalze 26 auf eine erste Isolierschicht 8 abgelegt. Der in Fig. 2 dargestellte Vorgang kann sich an ähnliche Vorgänge anschließen, bei denen die erste Isolierschicht 8 und/oder die innere Basisstruktur 6 auf einem Formwerkzeug (nicht gezeigt) angefertigt werden.

Es bietet sich insbesondere an, vorimprägnierte Bahnen einzusetzen, bei denen sich bei Bedarf die Faserarten und das Matrixmaterial unterscheiden können. Die erste Isolierschicht 8 kann etwa durch ein Glasfasergewebe realisiert werden, welches in eine nichtleitenden Matrix eingebettet ist.

Nachdem sämtliche vorgesehenen Bahnen abgelegt sind, kann auf gewöhnliche Weise eine Aushärtung vollzogen werden. Hierzu kann das Formwerkzeug in einen Aushärtungsofen gefahren und dort gemäß Anforderungen erwärmt werden.

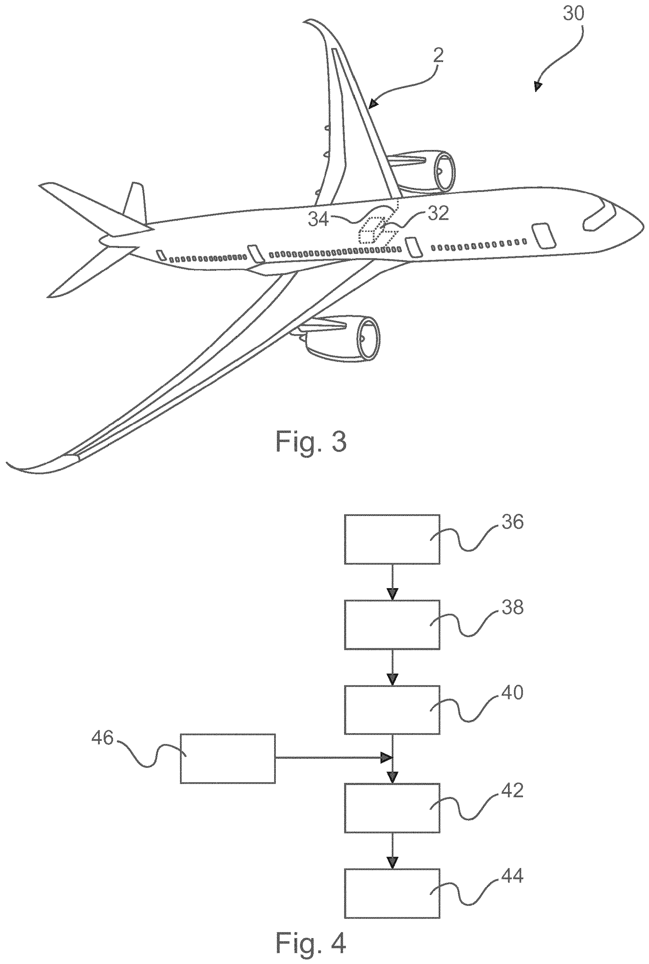

Fig. 3 zeigt ein Flugzeug 30, welches beispielhaft Strukturbauteile 2 besitzt, die hier in Form von Flügelvorderkanten ausgeführt sind. Diese sind dann durch die Funktionslage 10 beheizbar, die von einer elektrischen Energiequelle 32 über entsprechende Leitungen 34 mit elektrischer Spannung versorgbar sind.

Schließlich zeigt Fig. 4 eine schematische Darstellung eines Ablaufdiagramms des erfindungsgemäßen Verfahrens. Dieses weist die Schritte des Bereitstellens 36 einer inneren Basisstruktur 6, des Aufbringens 38 einer ersten Isolierschicht 8 auf die innere Basisstruktur 6, des Aufbringens 40 einer Funktionslage 10 in Form eines Matrixmaterials mit Kohlenstoff-Allotropen und des Aufbringens 42 einer Schutzschicht 16 auf. Das Bereitstellen 36 der inneren Basisstruktur 6 kann das Anfertigen einer Basisstruktur 6 auf einem Formwerkzeug mittels Verstärkungsfasern und einem Matrixmaterial umfassen.

Weiterhin kann das Verfahren den Schritt des Aushärtens 44 zumindest der Funktionslage 10 als abschließenden Schritt oder - alternativ - als Schritt vor dem Aufbringen 42 der Schutzschicht 16 aufweisen.

Außerdem kann das Verfahren ferner den Schritt des Aufbringens 46 einer zweiten Isolierschicht 14 vor dem Aufbringen 42 der Schutzschicht 16 aufweisen.

Weiterhin ist es auch möglich, durch Vorfertigung etwa mehrerer Schichten auch mehrere dieser Verfahrensschritte gleichzeitig auszuführen bzw. zu einem Schritt zusammenzufassen.

In einer vorteilhaften Ausführungsform kann das Verfahren zudem das Aufbringen 54 mindestens einer zusätzlichen Strukturschicht 40, die den Batterieaufbau 2 zumindest einseitig abdeckt und das Strukturbauteil 38 versteift, aufweisen.

Ergänzend sei darauf hingewiesen, dass "aufweisend" keine anderen Elemente oder Schritte ausschließt, und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

## Patentansprüche

1. Strukturbauteil (2) für ein Flugzeug (30), aufweisend:
mindestens einen aufheizbaren Bauteilabschnitt (4), der aufheizbare Bauteilabschnitt (4) aufweisend:
- einen Lagenaufbau mit einer inneren Basisstruktur (6),
- eine außerhalb der inneren Basisstruktur (6) angeordnete erste Isolierschicht (8),
- eine außerhalb der ersten Isolierschicht (8) angeordnete Funktionslage (10) aus in ein Matrixmaterial eingebetteten Kohlenstoff-Allotropen, und
- mindestens eine außerhalb der Funktionslage (10) angeordneten Schutzschicht (16),
ferner aufweisend eine mit der Funktionslage (10) verbundene elektrische Anschlusseinrichtung (12) zum selektiven Beaufschlagen der Funktionslage (10) mit einem elektrischen Strom zum Aufheizen der Funktionslage (10).

2. Strukturbauteil (2) nach Anspruch 1, ferner aufweisend eine außerhalb der Funktionslage (10) angeordnete zweite Isolierschicht (14).

3. Strukturbauteil (2) nach Anspruch 1 oder 2, wobei die innere Basisstruktur (6) eine Verbundstruktur aus einem Matrixmaterial mit darin eingebetteten Verstärkungsfasern aufweist.

4. Strukturbauteil (2) nach einem der vorhergehenden Ansprüche, wobei die innere Basisstruktur (6) einen kohlefaserverstärkten Kunststoff aufweist.

5. Strukturbauteil (2) nach einem der vorhergehenden Ansprüche, wobei die Funktionslage (10) Kohlenstoff-Nano-Röhrchen aufweist, die in das Matrixmaterial eingebettet sind.

6. Strukturbauteil (2) nach einem der vorhergehenden Ansprüche, wobei die erste Isolierschicht (8) eine thermische und elektrische Isolierschicht ist.

7. Strukturbauteil (2) nach einem der vorhergehenden Ansprüche, wobei die erste Isolierschicht (8) ein Glasfaserverbundmaterial aufweist.

8. Strukturbauteil (2) nach Anspruch 2, wobei die zweite Isolierschicht (14) eine elektrische Isolierschicht ist.

9. Strukturbauteil (2) nach Anspruch 2 oder 8, wobei die zweite Isolierschicht Aluminiumnitrid aufweist.

10. Verfahren zum Herstellen eines Strukturbauteils (2), insbesondere eines Strukturbauteils (2) nach einem der Ansprüche 1 bis 9, aufweisend die Schritte:
- Bereitstellen (36) einer inneren Basisstruktur (6),
- Aufbringen (38) einer ersten Isolierschicht (8) auf die innere Basisstruktur (6),
- Aufbringen (40) einer Funktionslage (10) in Form eines Matrixmaterials mit Kohlenstoff-Allotropen, und
- Aufbringen (42) einer Schutzschicht (16).

11. Verfahren nach Anspruch 10, ferner aufweisend den Schritt des Aushärtens (44) zumindest der Funktionslage (10) als abschließenden Schritt oder als Schritt vor dem Aufbringen (42) der Schutzschicht (16).

12. Verfahren nach Anspruch 10 oder 11, ferner aufweisend den Schritt des Aufbringens (46) einer zweiten Isolierschicht (14) vor dem Aufbringen (42) der Schutzschicht (16).

13. Flugzeug (30) aufweisend mindestens ein Strukturbauteil (2) nach einem der Ansprüche 1 bis 9, wobei das Flugzeug (30) eine elektrische Energiequelle (32) aufweist, die selektiv mit der Anschlusseinrichtung (12) verbindbar ist.

14. Fahrzeug (30) nach Anspruch 13, wobei der aufheizbare Bauteilabschnitt (4) an einer Vorderkante des Strukturbauteils (2) angeordnet ist.

15. Verwendung einer Funktionslage (10) aus in ein Matrixmaterial eingebetteten Kohlenstoff-Nanoröhrchen an einem Strukturbauteil (2) eines Flugzeugs (30) zur elektrischen Beheizung und zum Schutz vor mechanischen Stößen einer Vorderkante des Strukturbauteils (2).
